# EUROPÄISCHE PATENTANMELDUNG

(11) **EP 4 043 642 A1**
(43) Veröffentlichungstag der Anmeldung: **17.08.2022**
(21) Anmeldenummer: 22155906.5
(22) Anmeldetag: 09.02.2022
(51) Int. Cl.: E02B 15/04, B01D 17/02, C02F 1/40, B03D 1/14, E02B 15/00

(54) **VORRICHTUNG UND VERFAHREN ZUR SEPARATION VON VERUNREINIGUNGEN IN GEWÄSSERN**

(30) Priorität: 11.02.2021 DE 102021103236
(71) Anmelder: everwave GmbH, 52070 Aachen (DE)
(72) Erfinder: Hansch, Marcella, 52070 Aachen (DE); Flöhr, Tilman, 52074 Aachen (DE); Klosterhalfen, Hartwig, 53902 Bad Münstereifel (DE); Klosterhalfen, Jan, 52062 Aachen (DE)
(74) Vertreter: Grünecker Patent- und Rechtsanwälte PartG mbB

(57) **Zusammenfassung**

Die vorliegende Erfindung betrifft eine Vorrichtung zu einer Separation von Verunreinigungen in Gewässern mit einem Gehäuse (2), mit einem Einlass (14) und einem Auslass (16), der über einen in dem Gehäuse (2) gebildeten Strömungsweg (32) mit dem Einlass (14) verbunden ist, einer außerhalb des Strömungsweges (32) befindlichen Kammer (24) und einer in dem Strömungsweg (32) angeordneten Umlenkeinrichtung (18, 20, 48) zur Änderung der Strömungsrichtung in dem Strömungsweg (32). Die vorliegende Erfindung betrifft ferner ein Verfahren zur Separation von Verunreinigungen in Gewässern, bei dem das Gewässer gegen eine in einem Strömungsweg (32) angeordnete Umlenkeinrichtung (48) fließt, die eine Änderung der Strömungsrichtung bewirkt, durch die die Verunreinigungen in Richtung auf eine außerhalb des Strömungsweges (32) befindliche Kammer (24) umgelenkt werden.

## Beschreibung

Die vorliegende Erfindung betrifft eine Vorrichtung und ein Verfahren zur Separation von Verunreinigungen in Gewässern.

Die Verunreinigungen von Gewässern, beispielsweise die Verunreinigung der Meere mit Kunststoffmüll, wird zunehmend als Problem erkannt. Aus WO 2018/208159 A1 ist eine Vorrichtung zur Separation von Verunreinigungen bekannt, die auf der Wasseroberfläche treibt und in der Draufsicht V-förmig bzw. trichterförmig ausgebildet ist. Diese Vorrichtung soll auf der Wasseroberfläche schwimmende Partikel zurückhalten.

Eine alternative Lösung ist aus DE 10 2018 131 529 A1 bekannt. Bei dieser vorbekannten Lösung wird eine trichterförmige Sammelvorrichtung von Schiffen über das Meer gezogen. Im Boden der trichterförmigen Sammelvorrichtung ist eine Auslassöffnung vorgesehen, die mit einem lösbar daran angeordneten Steert verbunden ist, das die gesammelte Verunreinigung aufnimmt und im Falle einer Befüllung durch ein leeres Steert ersetzt werden kann.

Weitere Lösungen sind aus DE 20 2020 001 491 U1 bzw. DE 20 2018 000 128 U1 bekannt. EP 3 211 158 A1 beschreibt einen Oberflächenskimmer mit einer Fanglippe zum Absondern von Verunreinigungen aus einem Pool.

Die vorliegende Erfindung will eine Vorrichtung zur Separation von Verunreinigungen in Gewässern angeben, die eine einfache und effektive Beseitigung von Verunreinigungen aus dem Gewässer erlaubt. Dabei hat die vorliegende Erfindung insbesondere Verunreinigungen in fließenden Gewässern im Blick.

Im Hinblick auf dieses Problem wird mit der vorliegenden Erfindung eine Vorrichtung mit den Merkmalen von Anspruch 1 vorgeschlagen.

Die erfindungsgemäße Vorrichtung hat ein Gehäuse mit einem Einlass und einem Auslass, der über einen in dem Gehäuse ausgebildeten Strömungsweg mit dem Einlass verbunden ist. Außerhalb des Strömungsweges innerhalb des Gehäuses ist eine Kammer vorgesehen. Diese Kammer zeichnet sich dadurch aus, dass sie zumindest einen Kammereinlass, jedoch keinen Kammerauslass hat. Die Kammer dient der Lagerung der von dem Gewässer separierten Verunreinigung. Die Separation der Verunreinigung erfolgt bei der erfindungsgemäßen Vorrichtung durch eine in dem Strömungsweg angeordnete Umlenkeinrichtung zur Veränderung der Strömungsrichtung in dem Strömungsweg. Aufgrund dieser Änderung der Strömungsrichtung werden die Verunreinigungen in die Kammer abgeleitet.

Die vorliegende Erfindung will dementsprechend bevorzugt eine im Wesentlichen ungestörte Durchströmung des Gewässers erlauben. Die Strömung kann dabei die Strömung eines ohnehin fließenden Flusses sein. Selbstverständlich kann die vorliegende Erfindung auch relativ zu dem Gewässer bewegt werden, insbesondere, wenn es sich bei dem Gewässer um ein im Wesentlichen stehendes Gewässer handelt. Die erfindungsgemäße Vorrichtung beeinträchtigt danach üblicherweise die natürliche Strömung eines fließenden Gewässers nur unerheblich. Der Einlass in das Gehäuse und der Auslass aus dem Gehäuse liegen in Strömungsrichtung des Gewässers üblicherweise hintereinander. Eine gewisse Ablenkung der Strömung kann erlaubt sein. Diese beträgt aber üblicherweise nicht mehr als 40°. Das die Vorrichtung durchlaufende Wasser eines fließenden Gewässers wird entsprechend immer auch in Strömungsrichtung des fließenden Gewässers aus der Vorrichtung abgegeben. So bleibt die Strömungsenergie des fließenden Gewässers im Wesentlichen erhalten.

Die in dem Gehäuse vorgesehene Umlenkeinrichtung erzeugt eine gewisse Umlenkung, insbesondere Verwirbelung des Wassers in dem Strömungsweg, die eine die Verunreinigung in Richtung auf die Kammer mitnehmende Verwirbelung mit sich bringt.

Das Gehäuse bildet einen im Wesentlichen umfänglich geschlossenen Mantel aus, in dem der Einlass ausgespart ist. Auch der Auslass kann durch eine Öffnung in dem Mantel ausgebildet sein. In diesem Fall liegen sich Einlass und Auslass bei der Benutzung der Vorrichtung in einem Gewässer in horizontaler Richtung gegenüber. Alternativ oder zusätzlich kann der Auslass auch in einer sich orthogonal zu dem Mantel stehenden Ebene vorgesehen sein. Da es der vorliegenden Erfindung insbesondere darum geht, nahe der oder auf der Wasseroberfläche befindliche Verunreinigungen zu separieren, ist der Auslass üblicherweise in dem Boden des Gehäuses vorgesehen, das in das Gewässer eingetaucht ist. Um ein möglichst ungehindertes Strömen des Gewässers zu erlauben, ist das Gehäuse üblicherweise bodenseitig offen.

Die Vorrichtung kann mit zumindest einem Auftriebskörper versehen sein, der die Vorrichtung auf der Oberfläche des Gewässers hält, so dass der Mantel teilweise in das Wasser eingetaucht ist und teilweise über das Wasser hinausragt. Es versteht sich, dass die Vorrichtung in diesem Fall verankert ist, so dass sie nicht von der Strömung mitgenommen wird. Alternativ kann die Vorrichtung auch mit einer Hängevorrichtung verbunden sein, die die Vorrichtung mit der gewünschten Eintauchtiefe über der Wasseroberfläche hängend hält.

Die erfindungsgemäße Vorrichtung dient vor allem der Separation der Verunreinigung und Sammeln der Verunreinigung in der Kammer. Die dort gesammelte Verunreinigung kann händisch entfernt werden. Es ist vorstellbar, auf der Oberseite der Vorrichtung einen Steg auszubilden, der beispielsweise von dem Auftriebskörper über der Wasseroberfläche gehalten wird und über den der Bediener bis zu der Kammer gelangen und dort die in der Kammer angesammelte Verunreinigung entnehmen kann. Dies kann beispielsweise durch einen Kescher erfolgen. Ebenso gut kann der Kammer eine Hebeeinrichtung zum Ausfördern der Verunreinigung aus der Kammer zugeordnet sein.

Die Umlenkeinrichtung ist bevorzugt verhältnismäßig einfach ausgebildet. Sie bewirkt eine gewisse Umlenkung der Strömung. Es kommt insbesondere darauf an, ein bestimmtes Volumen der Strömung in dem Strömungsweg umzulenken. Aus Gründen einer einfachen Herstellung und mit Blick auf etwaige Wellenbewegungen oder Veränderungen der Höhenlage der Vorrichtung relativ zu der Oberfläche des Gewässers ist die Umlenkeinrichtung und/oder der Mantel des Gehäuses in Höhenrichtung der Vorrichtung einheitlich ausgebildet.

Besonders bevorzugt weist die Umlenkeinrichtung eine Platte auf oder ist durch diese gebildet. Die Platte kann als gradlinige Platte oder Blech ausgeformt sein. Gegebenenfalls kann auch die Platte gekrümmt sein, wobei die Krümmung üblicherweise so angeordnet ist, dass die Hauptströmung auf der konkaven Seite der gekrümmten Platte vorbeigeleitet wird. Die gekrümmte Platte erlaubt dementsprechend eine Umlenkung der Strömung bei geringer Verwirbelung.

Die die Verunreinigung in Richtung auf die Kammer bewirkende Umlenkung erfolgt üblicherweise an einem stirnseitigen Endbereich der Platte. Üblicherweise wird die Strömung an einer freien Kante der Platte verwirbelt. Dieser Wirbel leitet die Verunreinigung in Richtung auf die Kammer ab.

Das Gehäuse, die Umlenkeinrichtung und/oder die Kammer bzw. Teile davon können mit reibungserhöhenden Oberflächen versehen sein, durch welche die Ausbildung einer Änderung der Strömungsrichtung, insbesondere die Ausbildung einer lokalen Verwirbelung zum Ableiten der Verunreinigung in die Kammer begünstigt wird.

Das Gehäuse hat bevorzugt Rahmenelemente, die in Höhenrichtung beabstandet und relativ raum- und gewichtssparend ausgebildet sind. Diese Rahmenelemente können durch Mantelsegmente in Höhenrichtung miteinander verbunden sein, die den Mantel des Gehäuses ausbilden. Ein einzelnes Gehäusemodul der erfindungsgemäßen Vorrichtung hat bevorzugt zwei Rahmenelemente, die bevorzugt polygonal ausgebildet sind und an deren Ecken jeweils winklig gebogene Bleche vorgesehen sind, die die beiden Rahmenelemente miteinander verbindet. Ein solches polygonales Gehäusemodul ist üblicherweise die kleinste Einheit der Vorrichtung, wobei üblicherweise zumindest zwei solcher Gehäusemodule miteinander verbunden sind. Dabei bildet das eine Gehäusemodul ein Sammelgehäusemodul aus, welches die Kammer umfasst, und das andere Modul ein Separationsgehäusemodul, welches die Umlenkeinrichtung umfasst.

Die polygonale Ausgestaltung hat den Vorteil, dass die jeweiligen Gehäusemodule lückenlos und unmittelbar aneinander parkettiert werden können. So kann eine Vorrichtung mit einer Vielzahl von polygonalen Gehäusemodulen gebildet werden, von denen zumindest ein Gehäusemodul das Sammelgehäusemodul ausbildet und mehrere Gehäusemodule als Separationsgehäusemodule vorgesehen sind. Insbesondere diese Separationsgehäusemodule können in Reihe geschaltet sein, sodass der Auslass des vorderen Gehäusemoduls unmittelbar in den Einlass des hinteren Gehäusemoduls mündet. Mitunter können sich benachbarte Gehäusemodule auch beispielsweise eine Mantelfläche des Polygons teilen. Im Hinblick auf einen modularen Aufbau sind allerdings für sich eigenständige Gehäusemodule zu bevorzugen, die erst an Ort und Stelle miteinander verbunden werden. Die Verbindung kann dabei eine Steckverbindung sein, die sich werkzeugfrei herstellen lässt. So können die einzelnen Module an Ort und Stelle einfach zu einer einheitlichen Vorrichtung miteinander gefügt werden.

Zur Verstärkung des Gehäuses und/oder zur Befestigung von Teilen der Vorrichtung, insbesondere zur Befestigung der Umlenkeinrichtung hat das Gehäuse zumindest einen Verstärkungsrahmen, der das Innere des Gehäuses durchsetzt. Ein solcher Verstärkungsrahmen geht bevorzugt bei einer polygonalen Ausgestaltung von derjenigen ebenen Mantelfläche des Polygons ab, welche den Einlass ausbildet. Rechtwinklig von dem Einlass abgehend und an dem Verstärkungsrahmen befestigt, kann eine Platte vorgesehen sein, die die Umlenkeinrichtung ausbildet. Alternativ kann die Platte auch seitlich zu dem Einlass an dem Gehäuse befestigt und endseitig an dem Verstärkungsrahmen montiert sein.

Wie vorstehend erläutert, wird mit der vorliegenden Erfindung eine Vorrichtung zur Separation von Verunreinigungen in Gewässern angegeben, die einfach ausgebildet ist und einfach und wirkungsvoll eine Ausleitung von Verunreinigungen, insbesondere aus fließenden Gewässern erlaubt.

Bei dem erfindungsgemäßen Verfahren strömt das Gewässer gegen eine in dem Strömungsweg angeordnete Umlenkeinrichtung, die eine Änderung der Strömungsrichtung bewirkt. Aufgrund ihrer Trägheit werden die Verunreinigungen somit in einem Teilstrom abgetrennt und in Richtung auf eine außerhalb des Strömungsweges befindliche Kammer umgeleitet. Die verunreinigungsbeladene Teilströmung wird in die Kammer eingeleitet. Es ergibt sich in der Kammer in der Regel eine durchgehende Kreisbewegung innerhalb der Kammer. Die entstehenden radialen Kräfte bzw. Zentrifugalkräfte verursachen, dass die Verunreinigungen aufgrund der Dichteunterschiede nach außen transportiert werden. Somit werden die Verunreinigungen zu den Mantelflächen der Kammer gedrängt und legen sich gegen diese an. In dieser Kammer werden die Verunreinigungen gesammelt. Die daraus ergebende verunreinigungsfreie Strömung wird nach unten gezogen und verlässt somit die Kammer. Die Verunreinigungen haften an der Mantelfläche und bleiben damit auch bei geringen Dichteunterschieden zwischen den relativ leichteren aufschwimmenden Partikeln der Verunreinigung und dem relativ schwereren Wasser in der Kammer und werden nicht mit dem nach unten aus der Kammer abgeleiteten Wasser mitgezogen.

Das erfindungsgemäße Verfahren und auch die Vorrichtung haben nicht den Anspruch, sämtliche Verunreinigung beim Durchströmen der Vorrichtung zu erfassen. Es wird aber in der Regel ein Großteil der Verunreinigungen beim Durchströmen der Vorrichtung in die Kammer abgeleitet und somit von dem in den Strömungsweg fließenden Wasser separiert.

Weitere Einzelheiten und Vorteile der vorliegenden Erfindung ergeben sich aus der nachfolgenden Beschreibung von Ausführungsbeispielen in Verbindung mit der Zeichnung. In dieser zeigen:
- Fig. 1: eine perspektivische Draufsicht auf ein erstes Ausführungsbeispiel einer erfindungsgemäßen Vorrichtung;
- Fig. 2: eine Darstellung gemäß Fig. 1 für ein zweites Ausführungsbeispiel;
- Fig. 3: eine Darstellung gemäß Fig. 1 und 2 für ein drittes Ausführungsbeispiel;
- Fig. 4: eine schematische Draufsicht eines ersten Ausführungsbeispiels einer Anordnung von verschiedenen Modulen; und
- Fig. 5: eine Draufsicht auf ein zweites Ausführungsbeispiel für eine Anordnung von verschiedenen Modulen.

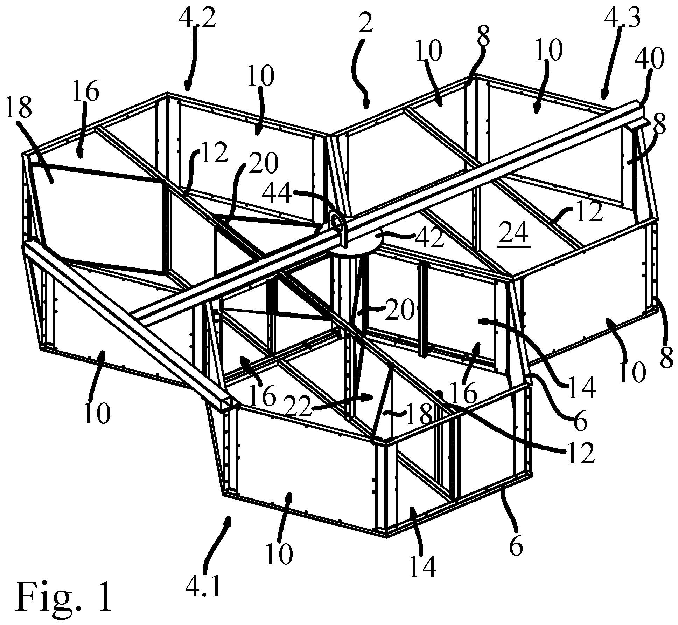

Die Fig. 1 zeigt eine Vorrichtung mit einem Gehäuse 2, welches vorliegend aus drei identisch ausgebildeten, jedoch jeweils unterschiedlich ausgestatteten Gehäusemodulen 4 geformt ist. Jedes Gehäusemodul 4 besteht aus zwei sechseckig gebogenen polygonalen Rahmenelementen 6, die höhenmäßig voneinander beabstandet und über winklig gebogene Eckbleche 8 miteinander verbunden sind. Diese Einheit aus Rahmenelementen 6 und Eckblechen 8 bildet die Basis des Gehäusemoduls 4 aus. Einzelne Polygonflächen sind mit Mantelelementen 10 verschlossen.

Die Mantelelemente 10 sind jeweils identisch ausgebildet und jeweils zumindest mit den Eckblechen 8 verschraubt. Die Rahmenelemente 6 können jeweils durch U- und/oder L-förmige Profile gebildet sein. Die Rahmenelemente 6 können so angeordnet sein, dass sich die U-förmigen Aufnahmen gegenüberliegen. Diese Aufnahmen können jeweils ein Mantelelement 10 mit wenig Spiel aufnehmen. Die Mantelelemente 10 können mit den Eckblechen 8 und/oder den Rahmenelementen 6 verklebt sein, insbesondere fluiddicht. Dadurch ist ein sauberer Abschluss, insbesondere an der Außenseite der Vorrichtung, gebildet. So ist die Gefahr reduziert, dass sich mit dem Gewässer mitgeschlepptes Treibgut an der Vorrichtung verfängt.

Bezugszeichen 12 kennzeichnet einen Verstärkungsrahmen, der bei jedem Gehäusemodul 4 vorgesehen ist. Bei dem in Fig. 1 vorderen Gehäusemodul 4 erstreckt sich dieser Verstärkungsrahmen 12 von einem Einlass 14 zu einem Auslass 16. Diese Öffnungen 14, 16 innerhalb des Gehäuses 2 werden zwischen zwei Eckblechen 8 und den beiden Rahmenelementen 6 gebildet. Die Öffnungen 14, 16 ergeben sich durch Auslassen eines Mantelelementes 10 an der jeweiligen Polygonfläche. Zwischen dem linken Eckblech 8 des Einlasses (in Strömungsrichtung gesehen) und dem Verstärkungsrahmen 12 befindet sich eine Platte 18 als konkretes Ausführungsbeispiel einer Umlenkeinrichtung, wobei die Platte 18 durch ein Blech gebildet ist. Das freie Ende der Platte 18 ist mit dem Verstärkungsrahmen 12 verbunden.

Der Verstärkungsrahmen 12 ist endseitig jeweils mit den Rahmenelementen 6 verbunden. In Strömungsrichtung hinter dieser ersten Platte 18 ist eine zweite Platte 20 vorgesehen, die - wie die erste Platte 18 - das Gehäusemodul 4 im Wesentlichen diagonal durchsetzt. Zwischen den freien Enden der ersten Platte 18 und der zweiten Platte 20 ist ein Strömungsdurchlass 22 ausgeformt.

Identisch wie das zuvor beschriebene erste Gehäusemodul 4.1 ist das mit Bezugszeichen 4.2 gekennzeichnete zweite Gehäusemodul ausgebildet. Allerdings ist das zweite Gehäusemodul 4.2 spiegelverkehrt zu dem ersten Gehäusemodul 4.1 angeordnet. Der Auslass 16 des ersten Gehäusemoduls 4.1 geht unmittelbar in den Einlass 14 des zweiten Gehäusemoduls 4.2 über.

Das mit Bezugszeichen 4.3 gekennzeichnete dritte Gehäusemodul hat keine Umlenkeinrichtung. Das Innere des Gehäusemoduls 4.3 wird lediglich von dem Verstärkungsrahmen 12 durchsetzt. Sämtliche Polygonflächen bis auf den Einlass 14, der mit einem Auslass 16 des ersten Gehäusemoduls 4.1 unmittelbar kommuniziert, sind mit einem Mantelelement 10 verschlossen. Dieses Gehäusemodul 4.3 bildet eine Kammer 24 zum Sammeln der Verunreinigungen aus.

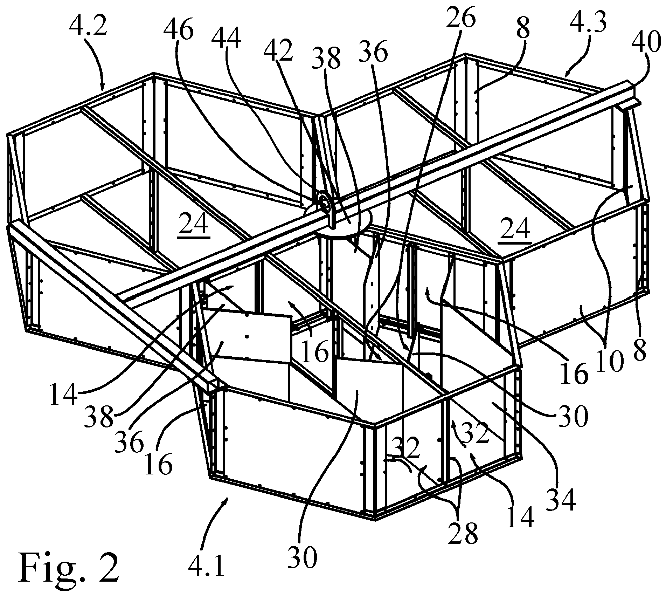

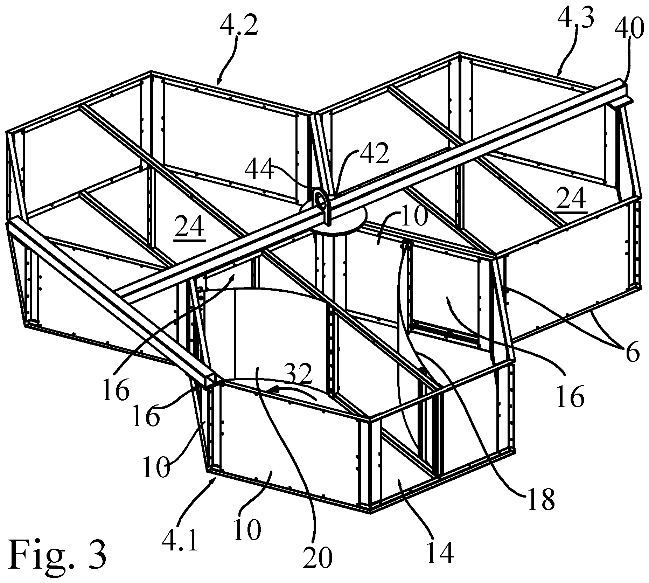

Bei den Varianten nach den Fig. 2 und 3 dienen die Gehäusemodule 4.3 jeweils als Kammern 24. Das Modul 4.2 dient vorwiegend, wenn nicht gar überwiegend, allein der Stabilisierung des Aufbaus und schafft dementsprechend Anlageflächen für die anderen, funktionalen Gehäusemodule 4.1 und 4.3.

Bei dem Ausführungsbeispiel nach Fig. 2 sind in dem ersten Gehäusemodul 4.1 abgewinkelte Bleche 26 eingangsseitig vorgesehen. Diese abgewinkelten Bleche 26 haben einen ersten Schenkel 28, der sich rechtwinklig zu einem Einlass 14 und parallel zu dem Verstärkungsrahmen 12 erstreckt und daran befestigt ist. Ein zweiter Schenkel 30 ragt schräg von dem Verstärkungsrahmen 12 ab. Innerhalb des Gehäusemoduls 4.1 wird ein Strömungsweg 32 außenseitig durch Leitbleche 34 begrenzt, die von dem äußeren Rand des Einlass 14 abgehen und bis zu den jeweiligen Auslässen 16 reichen. Auch die Leitbleche 34 sind abgewinkelt gebogen. Der auf den Auslass 14 jeweils zugehende Schenkel des Leitblechs 34 ist nicht im Eckbereich, sondern mit Abstand dazu innerhalb der den Auslass 16 ausformenden Polygonfläche an die Rahmenelemente 6 angeschlossen. So ist der Auslass 16 gegenüber dem Ausführungsbeispiel nach Fig. 1 verkleinert. Die Verkleinerung ergibt sich auch durch weitere Leitbleche 36, 38, die miteinander verschraubt sind. Das Leitblech 36 geht von der den Auslass 16 ausbildenden Polygonfläche ab. Das Leitblech 38 ist mit seinem einen Ende mit einem der Eckbleche 8 verbunden und mit dem anderen Ende mit dem Leitblech 36 verschraubt. Dadurch wird das von der Hauptströmung angestrahlte Leitblech 36 verstärkt und abgestützt.

Bei dem Ausführungsbeispiel nach Fig. 3 sind innerhalb des Gehäusemoduls 4.1 zwei gekrümmt gebogene Platten 18, 20 vorgesehen, die jeweils endseitig mit dem Verstärkungsrahmen 12 verbunden sind. Die Platte 18 endet dabei in dem Einlass 14 und lenkt die Strömung unmittelbar in die Kammer 24 des Gehäusemoduls 4.3. Dazu ist die Platte 18 mit dem anderen Ende innerhalb des Auslasses 16 mit den Rahmenelementen 6 verbunden, wobei die den Auslass 16 aufweisende Polygonfläche in etwa hälftig mit einem Mantelelement 10 verschlossen ist. Ein solches hälftiges Mantelelement 10 befindet sich auch auf der gegenüberliegenden Seite an demjenigen Auslass 16, in dem das eine freie Ende der Platte 20 angeordnet ist.

Sämtliche Ausgestaltungen bewirken eine Umlenkung der zunächst im Grunde rechtwinklig auf den Einlass 14 des Gehäusemoduls 4.1 auftreffenden Strömung eines Gewässers. Teilweise wird die Strömung dabei in Hauptströmungsrichtung in Richtung auf die jeweilige Kammer 24 durch die Platten 16,18 umgelenkt. Die entstehende Kreisbewegung in der Kammer 24 bewirkt eine verstärkte Separation von mit dem Wasser mitgeschleppten und auf der Oberfläche schwimmenden Partikeln einer Verunreinigung.

Bei den Ausführungsbeispielen nach den Fig.1 bis 3 sind sämtliche Gehäusemodule 4 miteinander verschraubt und zusätzlich über eine T-förmige Traverse 40 miteinander verbunden. Diese Traverse 40 liegt auf einer Befestigungsplatte 42 auf, von der eine Halteplatte 44 abragt, die eine von der Traverse 40 durchsetzte Öffnung hat und eine Öse 46 ausbildet, an der die gesamte Vorrichtung aufgehängt werden kann. Die Traverse 40 ist mit den freien Enden der jeweiligen Schenkel mit den einzelnen Gehäusemodulen 4.1, 4.2 und 4.3 verbunden, insbesondere verschraubt.

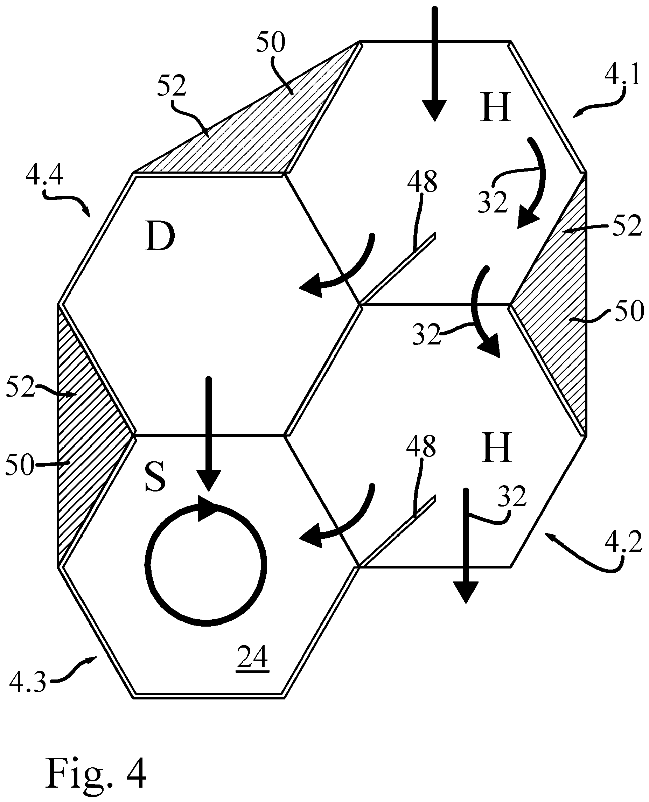

Die Fig. 4 zeigt eine denkbare Ausgestaltung einer Vorrichtung mit vier Gehäusemodulen, von denen die Gehäusemodule 4.1 und 4.2 jeweils als Separationsmodule im Sinne der Erfindung ausgebildet und mit einer mit Bezugszeichen 48 gekennzeichneten Umlenkeinrichtung versehen sind. Das Gehäusemodul 4.3 bildet ein Sammelgehäusemodul aus, welches lediglich Einlässe 40, jedoch keine am Umfang des entsprechenden Moduls 4.3 ausgesparten Auslass aufweist. Das Gehäusemodul 4.4 dient lediglich der Durchleitung der Strömung. Mit Bezugszeichen 50 sind Auftriebskörper gekennzeichnet, die in Zwickeln 52 in benachbarter polygonaler Gehäusemodule 4 angeordnet sind, sodass sich eine zumindest abschnittsweise ebene glatte Außenfläche ergibt. Die Bauräume für die Auftriebskörper haben eine dreieckige Grundfläche und entsprechen in ihrer Höhe den einzelnen Gehäusemodulen 4 bzw. sind als Auftriebskörper mit anderer Grundfläche als mit der dreieckigen Grundfläche vorgesehen, jedoch innerhalb der dreieckigen Grundfläche vorgesehen.

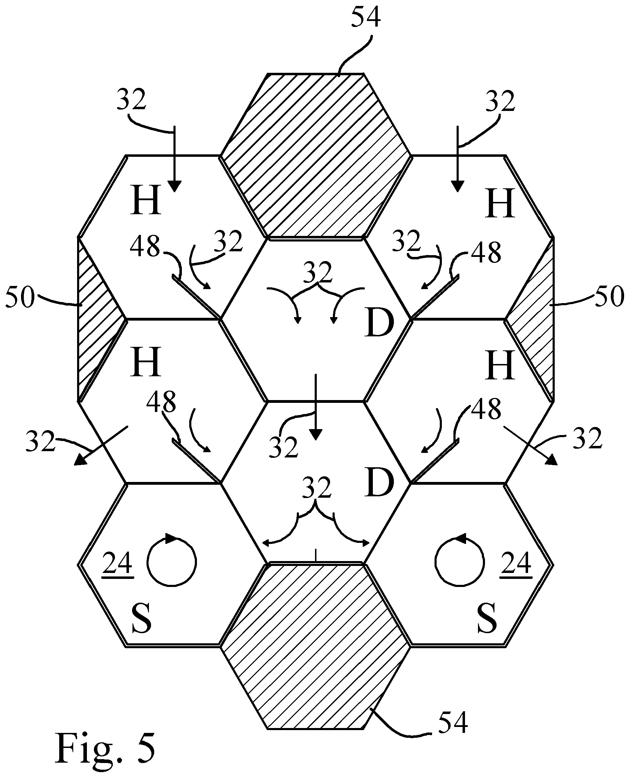

In Fig. 5 ist eine weitere Variante gezeigt. Diese Variante hat die zuvor beschriebenen dreieckigen Auftriebskörper 50 in Zwickeln 52 sowie sechseckig polygonale Auftriebskörper 54, die in Strömungsrichtung vorne und hinten vorgesehen sind. Die einzelnen Gehäusemodule sind gekennzeichnet, wobei S für ein Sammelgehäusemodul, H für ein Separationsgehäusemodul und D für ein Modul steht, welches lediglich der Durchleitung der Strömung dient. Die Pfeile kennzeichnen die jeweiligen Strömungswege 32 in den Modulen 4.

Die zuvor diskutierten Ausführungsbeispiele erlauben jeweils eine im Wesentlichen horizontale Durchströmung der Vorrichtung. Die Module sind so relativ zu dem Gewässer positioniert, dass die Platten 16, 18 sowie die Mantelelemente 10 teilweise in das Wasser eingetaucht sind und teilweise die Oberfläche des Gewässers überragen. Die entsprechenden Elemente sind höhenmäßig dabei so ausgelegt, dass übliche Änderungen des Pegels bei einer aufgehängten Vorrichtung nicht dazu führen, dass die Strömung über die Platten 16, 18 bzw. die Mantelelemente 10 schwappt. Der Boden der jeweiligen Module 4 und des Gehäuses 2 ist insgesamt offen, sodass ein Austritt von Wasser nach unten jederzeit möglich ist. Die Verunreinigungen haben eine geringere Dichte als das Wasser und schwimmen dementsprechend auf dem Wasser. Sie werden im Rahmen der Abwärtsbewegung des Wassers üblicherweise nicht mitgerissen. Auch die dem Boden gegenüberliegende Fläche der Gehäusemodule 4 und damit des Gehäuses ist frei zugänglich. So kann Verunreinigung, die sich in der Kammer 24 angesammelt hat, von oben entnommen werden.

### Bezugszeichenliste

- 2: Gehäuse
- 4: Gehäusemodul
- 4.1: Gehäusemodul
- 4.2: Gehäusemodul
- 4.3: Gehäusemodul
- 4.4: Gehäusemodul
- 6: Rahmenelement
- 8: Eckblech
- 10: Mantelelement
- 12: Verstärkungsrahmen
- 14: Einlass
- 16: Auslass
- 18: Platte
- 20: Platte
- 22: Strömungsdurchlass
- 24: Kammer
- 26: abgewinkelte Bleche
- 28: erster Schenkel
- 30: zweiter Schenkel
- 32: Strömungsweg
- 34: Leitblech
- 36: Leitblech
- 38: Leitblech
- 40: Traverse
- 42: Befestigungsplatte
- 44: Halteplatte
- 46: Öse
- 48: Umlenkeinrichtung
- 50: Auftriebskörper
- 52: Zwickel
- 54: Auftriebskörper
- D: Gehäusemodul zur Durchleitung der Strömung
- H: Separationsgehäusemodul
- S: Sammelgehäusemodul

## Patentansprüche

1. Vorrichtung zu einer Separation von Verunreinigungen in Gewässern mit einem Gehäuse (2), mit einem Einlass (14) und einem Auslass (16), der über einen in dem Gehäuse (2) gebildeten Strömungsweg (32) mit dem Einlass (14) verbunden ist, einer außerhalb des Strömungsweges (32) befindlichen Kammer (24) und einer in dem Strömungsweg (32) angeordneten Umlenkeinrichtung (18, 20, 48) zur Änderung der Strömungsrichtung in dem Strömungsweg (32).

2. Vorrichtung nach Anspruch 1, **dadurch gekennzeichnet, dass** der Einlass (14) und der Auslass (16) an einem wesentlich umfänglich geschlossenen Mantel des Gehäuses (2) vorgesehen ist.

3. Vorrichtung nach Anspruch 1, **dadurch gekennzeichnet, dass** der Einlass (14) an einem wesentlich umfänglich geschlossenen Mantel des Gehäuses (2) vorgesehen ist und der Auslass (16) in einer zu sich orthogonal zu dem Mantel entstehenden Ebenen vorgesehen ist.

4. Vorrichtung nach einem der vorherigen Ansprüche, **dadurch gekennzeichnet, dass** die Vorrichtung mindestens einen Auftriebskörper (50) hat.

5. Vorrichtung nach einem der vorherigen Ansprüche, **dadurch gekennzeichnet, dass** das Gehäuse (2), die Umlenkeinrichtung (18, 20, 48) und/oder die Kammer (24) reibungserhöhende Oberflächenstrukturen aufweisen.

6. Vorrichtung nach einem der vorherigen Ansprüche, **dadurch gekennzeichnet, dass** die Umlenkeinrichtung (18, 20, 48) spiralförmig geformt ist.

7. Vorrichtung nach einem der vorherigen Ansprüche, **dadurch gekennzeichnet, dass** die Umlenkeinrichtung (18, 20, 48) mindestens eine Platte (20) ausformt.

8. Vorrichtung nach einem der vorherigen Ansprüche, **dadurch gekennzeichnet, dass** die Umlenkeinrichtung (18, 20, 48) mindestens eine gekrümmte Platte (18) aufweist.

9. Vorrichtung nach einem der vorherigen Ansprüche, **dadurch gekennzeichnet, dass** das Gehäuse (2) mindestens einen Verstärkungsrahmen (12) aufweist, der das Innere des Gehäuses (2) durchsetzt.

10. Vorrichtung nach einem der vorherigen Ansprüche, **dadurch gekennzeichnet, dass** die Umlenkeinrichtung (48) an dem Gehäuse (2) und/oder dem Verstärkungsrahmen (12) montiert ist.

11. Vorrichtung nach einem der vorherigen Ansprüche, **gekennzeichnet durch** zumindest zwei Gehäusemodule (4), die jeweils eine polygonale Grundfläche aufweisen, wobei ein Sammelgehäusemodul (S) die Kammer (24) umfasst und ein Separationsgehäusemodul (H) die Umlenkeinrichtung (18, 20, 48) umfasst.

12. Vorrichtung nach Anspruch 11, **dadurch gekennzeichnet, dass** die Grundflächen der Gehäusemodule (4) regelmäßige Polygone sind.

13. Vorrichtung nach Anspruch 11 oder 12, **dadurch gekennzeichnet, dass** die Gehäusemodule (4) lückenlos und unmittelbar aneinander parkettiert sind.

14. Vorrichtung nach Anspruch 11, 12 oder 13, **dadurch gekennzeichnet, dass** mindestens zwei Gehäusemodule (4) in Reihe geschaltet sind, sodass der Auslass (16) des vorderen Gehäusemoduls (4.1) unmittelbar in den Einlass (14) des hinteren Gehäusemoduls (4.2; 4.3) mündet.

15. Vorrichtung nach einem der vorherigen Ansprüche, **dadurch gekennzeichnet, dass** das Gehäuse (2) zwei parallel angeordnete Rahmenelemente (6) aufweist, die an den Ecken jeweils durch winkelig gebogene Bleche (8) miteinander verbunden sind.

16. Verfahren zur Separation von Verunreinigungen in Gewässern, bei dem das Gewässer gegen eine in einem Strömungsweg (32) angeordnete Umlenkeinrichtung (48) fließt, die eine Änderung der Strömungsrichtung bewirkt, durch die die Verunreinigungen in Richtung auf eine außerhalb des Strömungsweges (32) befindliche Kammer (24) umgelenkt werden.
